# EUROPÄISCHE PATENTSCHRIFT

(11) **EP 0 659 958 B1**
(45) Veröffentlichungstag und Bekanntmachung des Hinweises auf die Patenterteilung: **15.10.1997**
(21) Anmeldenummer: 94119555.4
(22) Anmeldetag: 10.12.1994
(51) Int. Cl.: E04H 6/00, B62H 3/12

(54) **Karussell-Fahrradhänger**
Carousel-type hanger for bicycles
Dispositif d'accrochage pour vélos du type carrousel

(30) Priorität: 21.12.1993 DE 9319662 U
(43) Veröffentlichungstag der Anmeldung: 28.06.1995
(73) Patentinhaber: Odenwaldwerke Rittersbach GmbH, 74834 Elztal-Rittersbach (DE)
(72) Erfinder: Ostheimer, Tibor, D-74821 Mosbach (DE)
(74) Vertreter: Fischer, Wolf-Dieter, Dipl.-Ing.

(56) Entgegenhaltungen:
- WO-A-92/22718
- DE-A- 4 209 007
- DE-C- 105 950
- DE-U- 9 217 562
- US-A- 4 156 994

## Beschreibung

Die Erfindung betrifft einen Karussell-Fahrradhänger, bei dem an einem Drehkranz an Auslegerarmen eine Anzahl von Fahrrädern aufhängbar ist.

Es ist ein derartiger Karussell-Fahrradhänger bekannt (DE-A-85 01 475), bei dem an einer Säule, die mittels eines bodenseitigen Kugellagers drehbar ist, am oberen Teil zum Aufhängen von Fahrrädern geeignete Auslegerarme angebracht sind. Der wesentliche Nachteil dieser Ausführungsform besteht darin, daß nur wenige Fahrräder untergebracht werden können und insbesondere auch der tiefe Raum nicht ausgenutzt wird. Insbesondere ist bei dieser bekannten Ausführungsform eine Diebstahlsicherung nicht vorgesehen, wobei das Drehen der Säule von Hand aus erfolgt.

Bekannt ist weiterhin ein Fahrradhaus (DE-A-92 17 562), bei dem innerhalb eines geschlossenen Käfigs eine drehbare Säule angeordnet ist, an der eine begrenzte Anzahl von Fahrrädern aufgehängt werden kann. Der Zugang des Käfigs erfolgt über eine absperrbare Tür. Auch bei dieser Ausführungsform ergibt sich insbesondere der Nachteil, daß nur eine begrenzte Anzahl von Fahrrädern untergebracht werden kann und damit eine Anpassung an vorhandene Platzverhältnisse nicht möglich ist. Die vorgesehene Diebstahlsicherung ist ungenügend.

Der Erfindung liegt die Aufgabe zugrunde, einen Karussell-Fahrradhänger so auszubilden, daß eine optimale Platz- und Raumausnutzung bei guter Diebstahlsicherung möglich ist.

Diese Aufgabe wird nach der Erfindung dadurch gelöst, daß als Drehkranz zwei im Abstand zueinander angeordnete Laufschienen vorgesehen sind, die mit Hilfe eines Stützgerüstes gehalten sind, wobei an den Laufschienen einzelne Fahrradkäfige geführt und mittels eines Förderkettenantriebes bewegbar sind.

Eine vorteilhafte Ausführungsform sieht vor, daß das Stützgerüst obere und untere, miteinander verbindbare Tragelemente aufweist, die mittels Stützstangen gegeneinander abgestützt sind.

Es ist vorteilhaft, daß das Stützgerüst zwei Abschlußrahmen und mehrere Zwischenrahmen aufweist, wobei sich an den Rahmen Aufnahmeteile für die zusammensteckbaren oberen und unteren Tragelemente befinden.

Außerdem ist es vorteilhaft, daß der Förderkettenantrieb an Konsolen der Abschlußrahmen befestigt ist.

Weiterhin ist es vorteilhaft, daß die Fahrradkäfige mittels Mitnehmer in eine Förderkette des Förderkettenantriebes eingreifen.

Eine vorteilhafte Ausführungsform sieht vor, daß die Fahrradkäfige mittels Verbindungsstangen oben und unten verbunden sind, wobei die Mitnehmer in einen Drehkranz mit Mitnehmernasen eingreifen.

Weiterhin wird vorgeschlagen, daß ein durch eine Tür absperrbarer Zugang vorgesehen ist, an dem eine Steuerung für den Lauf der Fahrradkäfige angebracht ist.

Eine vorteilhafte Ausführungsform sieht vor, daß ein aus dem Fahrradkäfig herausschwenkbarer Auslegerarm in Form eines Hebelparallelogramms vorgesehen ist, wobei an dem einen Hebelarm eine Gasfeder angreift.

Schließlich wird vorgeschlagen, daß der Fahrradkäfig einen sich vertikal erstreckenden U-förmigen Rahmen aufweist.

Die Erfindung bringt den wesentlichen Vorteil, daß der Karussell-Fahrradhänger an die vorhandenen Raummöglichkeiten durch ein Baukastensystem beliebig angepaßt werden kann. Der Zugang zu dem Karussell läßt sich durch ein besonderes Steuerungssystem, beispielsweise nach dem Magnetkartenprinzip ausgestalten. Hierbei können in den einzelnen Käfigen auch Taschen oder persönliche Gegenstände mit untergebracht werden.

Die Erfindung wird in der nachfolgenden Beschreibung anhand von in den Zeichnungen dargestellten Ausführungsbeispielen näher erläutert.

Es zeigen,
- Fig. 1: eine schaubildliche Ansicht eines derartigen Karussell-Fahrradhängers,
- Fig. 2: einen Grundriß des Karussells,
- Fig. 3: eine Ansicht für die Zugangsmöglichkeit zu dem Karussell,
- Fig. 4: eine schaubildliche Ansicht des Karussel-Fahrradhängers gemäß einer weiteren Ausführungsform,
- Fig. 4a: eine Teilansicht dieser Ausführungsform mit dem Antrieb,
- Fig. 5: eine perspektivische Darstellung des Fahrradkäfigs,
- Fig. 6: eine erste Ausführungsmöglichkeit für die Aufhängung des Käfigs,
- Fig. 7: eine weitere Möglichkeit für die Aufhängung des Käfigs,
- Fig. 8a und 8b: zwei weitere Möglichkeiten für die Führung des Käfigs,
- Fig. 9: eine Ansicht des einzuhängenden Fahrrades gemäß einer Ausführungsform für die Ausgestaltung des Hebemechanismus und
- Fig. 10: eine Ansicht des am Karussel-Fahrradhängers angeordneten Käfigs mit dem einzuhängenden Fahrrad und dem Hebemechanismus.

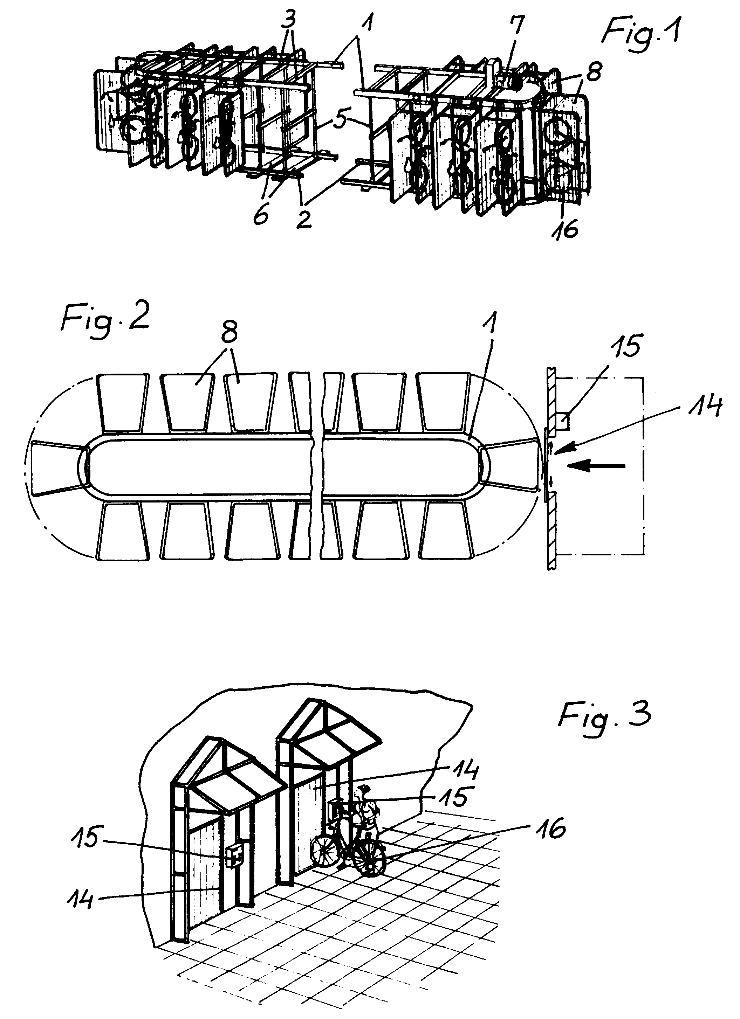

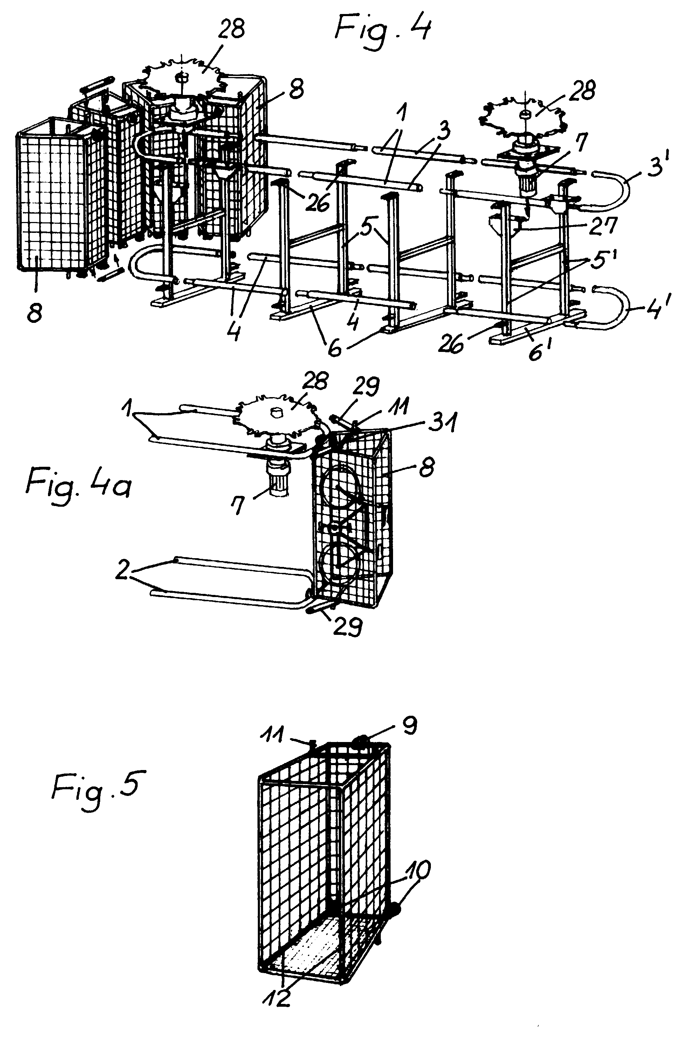

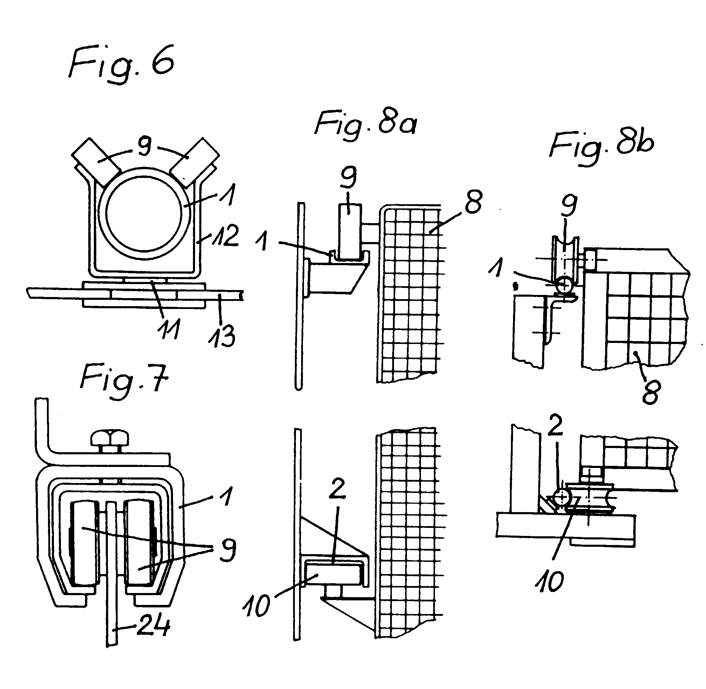

Die Fig. 1 zeigt einen sich längs erstreckenden Karussell-Fahrradhänger mit einer Anzahl von Fahrradkäfigen 8, die zur Aufnahme von Fahrrädern und gegebenenfalls auch von Taschen und anderen persönlichen Gegenständen dienen können. Dieser Karussell-Fahrradhänger ist nach dem Baukastenprinzip aufgebaut und kann beliebig erweitert werden. Die einzelnen Fahrradkäfige 8 sind an oberen Laufschienen 1 sowie unteren Laufschienen 2 geführt und zwar mit Hilfe einer oberen Laufrolle 9 bzw. unteren Laufrolle 10. Die einzelnen Käfige 8 sind mit Hilfe von Mitnehmern 11 (Fig. 5) an einer Förderkette 13 (Fig. 6) eingehängt und werden mit Hilfe eines Förderkettenantriebes 7 im Umlauf angetrieben.

Die beiden Laufschienen 1, 2 sind an einem Stützgerüst gehaltert, das aus oberen Tragelementen 3 mit kreisförmigen Abschlußelementen 3' und unteren Tragelementen 4 mit entsprechenden Abschlußelementen 4' und dazwischen angeordneten Stützstangen 5 sowie Grundplatten 6 gehaltert. Die einzelnen, die beiden Laufschienen 1, 2 bildenden Tragelemente 3, 4 sind zusammensteckbar, so daß das Stützgerüst beliebig in der Länge erweiterbar ist.

Der Förderkettenantrieb 7 weist ein spezielles Getriebe mit integrierter Steuerung auf, so daß ein langsames Anfahren, ein schnelles Fahren, ein langsames Anhalten bzw. in bestimmten Positionen Bremsen ermöglicht wird.

Die Figuren 4 und 4a zeigen eine Ausführungsform des Karussel-Fahrradanhängers mit einer besonders vorteilhaften Ausgestaltung nach dem Baukastenprinzip, wobei die Stützstangen 5 und die Grundplatten 6 mit zusätzlichen Quer-streben Zwischenrahmen bilden und die Stützstangen 5' sowie die Grundplatten 6' mit entsprechenden Querstreben Abschlußrahmen bilden, wobei jeweils an den Stützstangen 5 Tragelemente 26 zur Aufnahme der oberen und unteren Tragelemente 3, 3' bzw. 4, 4' vorgesehen sind. An den Stützstangen 5' der Abschlußrahmen sind darüberhinaus Konsolen 27 angebracht, an denen der bzw. die Förderkettenantriebe 7 befestigbar sind. Die Laufschienen 1, 2 werden von den zusammensteckbaren oberen und unteren Tragelementen 3, 4 bzw. den kreisförmigen Abschlußelementen 3' bzw. 4' gebildet. Hierbei sind diese Laufschienen 1, 2 waagerecht und parallel zueinander angebracht.

Bei diesem Ausführungsbeispiel sind die einzelnen Käfige 8 oben und unten mit Hilfe von gelenkig angeordneten Verbindungsstangen 29 zusammengehängt, wobei zwischen den Gelenken der Verbindungsstangen 29 quer über den Käfig 8 eine Verbindungsstange 31 reicht. Der Förderkettenantrieb 7 ist mit einem Drehkranz 28 versehen, in den die hochragenden Mitnehmer 11 an Mitnehmernasen 30 des Drehkranzes 28 eingreifen.

In den Figuren 6 bis 8 sind verschiedene Möglichkeiten für die Aufhängung der Fahrradkäfige 8 an den Laufschienen 1, 2 dargestellt, wobei in Fig. 6 eine rohrförmige Laufschiene 1 vorgesehen ist, auf der in V-förmiger Anordnung zwei Laufrollen 9 anliegen, die am Käfigrahmen 12 angeordnet sind, der über Mitnehmer 11 in die Förderkette 13 eingreift. Bei der Ausführungsform nach Fig. 7 ist eine U-förmige Laufschiene 1 vorgesehen, in der die Laufrollen 9 geführt und über eine Verbindungsstange 24 mit dem Fahrradkäfig 8 verbunden sind. Bei zwei weiteren Ausführungsformen nach den Figuren 8a und 8b sind die oberen Laufrollen 9 vertikal an der oberen Laufschiene 1 abgestützt, während die unteren Laufrollen 10 an der unteren Laufschiene 2 waagerecht geführt sind.

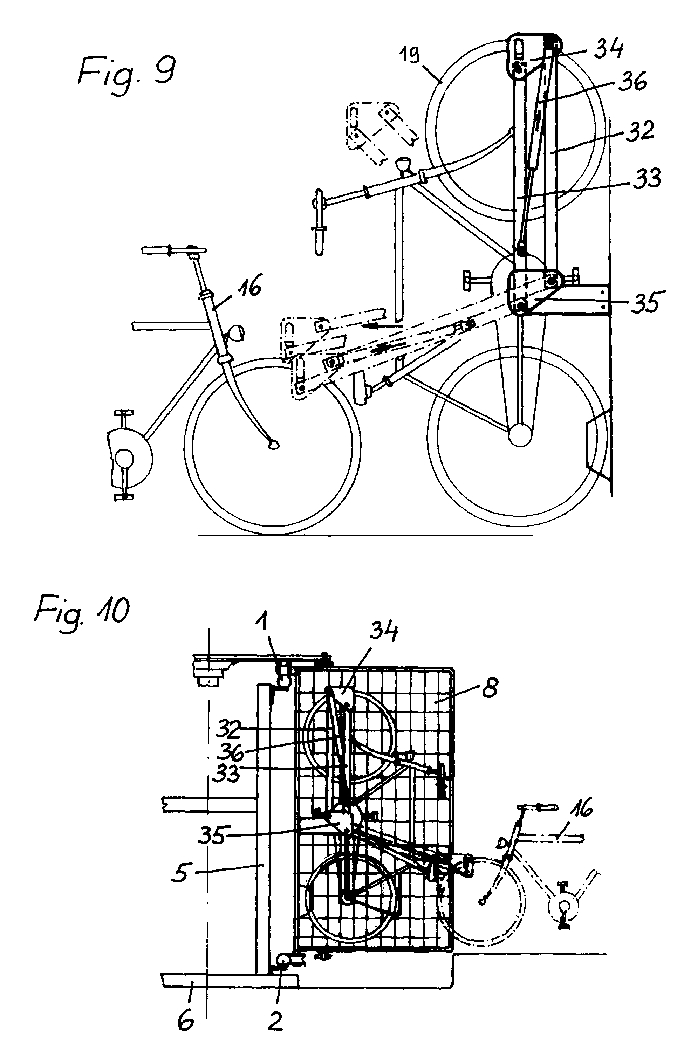

Der Fahrradkäfig 8 (Fig. 5) weist einen sich vertikal erstreckenden U-förmigen Käfigrahmen 12 auf, in dem ein Fahrrad 16 vertikal geparkt werden kann (Figuren 1 und 10). Zum einfachen Einstellen des Fahrrades 16 in diese Parkposition dient ein Hebemechanismus, der den Reifen 19 erfaßt.

Die Figur 9 zeigt diese Ausführungsform für den Hebemechanismus, wobei dieser Hebemechanismus im wesentlichen aus einem Hebelparallelogramm besteht. Dieses Hebelparallelogramm weist zwei parallele lange Hebel 32, 33 auf, die an Verbindungslaschen 34, 35 verbunden sind. An der am Fahrrad 16 einzuhängenden Verbindungslasche 34 greift eine Gasfeder 36 an, deren anderes Ende an dem einen langen Hebel 33 befestigt ist.

In der Ausgangsposition sind die beiden Hebelarme 32, 33 so ausgelenkt, daß sie aufeinanderliegen. Die Gasfederkraft hat in dieser Position keine Wirkung. Mit einem geringen Kraftaufwand läßt sich das Fahrrad 16 dann in die vertikale Position anheben, wobei in dieser Position die Gasfederkraft den größten Wert aufweist. Die Aufnahmegabel entsprechend der Verbindungslasche 34 verbleibt in jeder Position in der selben Stellung, wodurch ein Verdrehen der Aufnahmegabel gegen das Fahrrad vermieden wird.

Der Karussell-Fahrradhänger wird zweckmäßigerweise in einem Gebäude untergebracht und ist dann von außen über eine zentrale Tür 14, wie dies in Fig. 3 angedeutet ist, zugänglich. Zum Öffnen der Tür 14 und auch zum Steuern des Karussells dient eine Steuerung 15, die beispielsweise nach dem Magnetkartenprinzip funktioniert, so daß beim Einschieben einer entsprechenden Karte das bestimmte Fahrrad, wie es ursprünglich positioniert worden ist, wieder abgerufen werden kann. Die Tür 14 kann beispielsweise an der Stirnseite des Karussells angeordnet sein, wobei in Fig. 3 angedeutet ist, daß zwei solcher Karussells nebeneinander gebaut sind.

### Bezugszeichenliste

- 1 =: obere Laufschiene
- 2 =: untere Laufschiene
- 3 =: obere Tragelemente
- 3' =: kreisförmige Abschlußelemente oben
- 4 =: untere Tragelemente
- 4' =: untere kreisförmige Abschlußelemente
- 5 =: Stützstangen
- 5' =: Stützstangen für Abschlußrahmen
- 6 =: Grundplatten
- 6' =: Grundplatten für Abschlußrahmen
- 7 =: Förderkettenantrieb
- 8 =: Käfig
- 9 =: Laufrollen oben
- 10 =: Laufrollen unten
- 11 =: Mitnehmer
- 12 =: Käfigrahmen
- 13 =: Förderkette
- 14 =: Tür
- 15 =: Steuerung
- 16 =: Fahrrad
- 19 =: Reifen
- 24 =: Verbindungsstange
- 26 =: Tragelemente
- 27 =: Konsole
- 28 =: Drehkranz
- 29 =: Verbindungsstange
- 30 =: Mitnehmernasen
- 31 =: Querstange
- 32 =: langer Hebel
- 33 =: langer Hebel
- 34 =: Verbindungslasche
- 35 =: Verbindungslasche
- 36 =: Gasfeder

## Patentansprüche

1. Karussell-Fahrradhänger, bei dem an einem Drehkranz (28) an Auslegerarmen eine Anzahl von Fahrrädern aufhängbar ist, dadurch gekennzeichnet, daß als Drehkranz zwei im Abstand zueinander angeordnete Laufschienen (1, 2) vorgesehen sind, die mit Hilfe eines Stützgerüstes (3, 4, 5, 6) gehalten sind, wobei an den Laufschienen (1, 2) einzelne Fahrradkäfige (8) geführt und mittels eines Förderkettenantriebes (7) bewegbar sind.

2. Karussell-Fahrradhänger nach Anspruch 1, dadurch gekennzeichnet, daß das Stützgerüst obere und untere, miteinander verbindbare Tragelemente (3, 4, 4', 3') aufweist, die mittels Stützstangen (5) gegeneinander abgestützt sind.

3. Karussel-Fahrradhänger nach Anspruch 1 oder 2, dadurch gekennzeichnet, daß das Stützgerüst zwei Abschlußrahmen (5', 6') und mehrere Zwischenrahmen (5, 6) aufweist, wobei sich an den Rahmen (5, 6; 5', 6') Aufnahmeteile (26) für die zusammensteckbaren oberen und unteren Tragelemente (3, 4; 3', 4') befinden.

4. Karussel-Fahrradhänger nach Anspruch 1 bis 3, dadurch gekennzeichnet, daß der Förderkettenantrieb (7) an Konsolen (27) der Abschlußrahmen (5', 6') befestigt ist.

5. Karussell-Fahrradhänger nach Anspruch 1 bis 4, dadurch gekennzeichnet, daß die Fahrradkäfige (8) mittels Mitnehmern (11) in eine Förderkette (13) des Förderkettenantriebes (7) eingreifen.

6. Karussel-Fahrradhänger nach einem der Ansprüche 1 bis 5, dadurch gekennzeichnet, daß die Fahrradkäfige (8) mittels Verbindungsstangen (29) oben und unten verbunden sind, wobei die Mitnehmer (11) in einen Drehkranz (28) mit Mitnehmernasen (30) eingreifen.

7. Karussell-Fahrradhänger nach Anspruch 1 bis 6, dadurch gekennzeichnet, daß ein durch eine Tür (14) absperrbarer Zugang vorgesehen ist, an dem eine Steuerung (15) für den Lauf der Fahrradkäfige (8) angebracht ist.

8. Karussel-Fahrrradhänger nach Anspruch 1 bis 7, dadurch gekennzeichnet, daß ein aus dem Fahrradkäfig (8) herausschwenkbarer Auslegerarm in Form eines Hebelparallelogramms (32, 33, 34, 35) vorgesehen ist, wobei an dem einen Hebelarm (32) eine Gasfeder (36) angreift.

9. Karussell-Fahrradhänger nach einem der Ansprüche 1 bis 8, dadurch gekennzeichnet, daß der Fahrradkäfig (8) einen sich vertikal erstreckenden U-förmigen Rahmen (12) aufweist.

## Claims

1. Carousel bicycle hanging system, in which a number of bicycles may be hung from a rotating rim (28), on extension arms, characterized in that the rotating rim comprises two travel rails (1, 2) which are arranged at a distance from one another and are held with the aid of a support framework (3, 4, 5, 6), individual bicycle cages (8) being guided on the travel rails (1, 2) and being movable by means of a conveyor chain drive (7).

2. Carousel bicycle hanging system according to Claim 1, characterized in that the support framework has upper and lower carrier elements (3, 4, 4', 3') which can be connected to one another and which are braced against one another by means of support bars (5).

3. Carousel bicycle hanging system according to Claim 1 or 2, characterized in that the support framework has two end frames (5', 6') and several intermediate frames (5, 6), receiving parts (26) for the upper and lower carrier elements (3, 4; 3', 4') which can be joined together being located on the frames (5, 6; 5', 6').

4. Carousel bicycle hanging system according to Claims 1 to 3, characterized in that the conveyor chain drive (7) is secured to brackets (27) of the end frames (5', 6').

5. Carousel bicycle hanging system according to Claims 1 to 4, characterized in that the bicycle cages (8) engage in a conveyor chain (13) of the conveyor chain drive (7) by means of driving dogs (11).

6. Carousel bicycle hanging system according to one of Claims 1 to 5, characterized in that the bicycle cages (8) are connected at the top and bottom by means of connecting bars (29), the driving dogs (11) engaging in a rotating rim (28) with driving projections (30).

7. Carousel bicycle hanging system according to Claims 1 to 6, characterized in that an entrance is provided, which entrance can be sealed off by means of a door (14) and on which a control system (15) for operation of the bicycle cages (8) is mounted.

8. Carousel bicycle hanging system according to Claims 1 to 7, characterized in that an extension arm which is in the form of a lever parallelogram (32, 33, 34, 35) and can be swung out from the bicycle cage (8) is provided, a gas spring (36) engaging on one lever arm (32).

9. Carousel bicycle hanging system according to Claims 1 to 8, characterized in that the bicycle cage (8) has a U-shaped frame (12) extending vertically.

## Revendications

1. Un dispositif d'accrochage pour vélos du type carrousel, dans lequel il est possible d'accrocher un certain nombre de bicyclettes à des potences sur une couronne rotative (28), caractérisé en ce qu'il est prévu comme couronne rotative deux rails (1, 2) disposés à distance l'un de l'autre, qui sont maintenus à l'aide d'une ossature de support (3, 4, 5, 6), des cages à bicyclette (8) individuelles étant guidées sur les rails (1, 2) et mobiles au moyen d'une commande de transport par chaîne (7).

2. Un dispositif d'accrochage pour vélos du type à carrousel selon la revendication 1, caractérisé en ce que l'ossature de support présente des éléments porteurs supérieurs et inférieurs pouvant être assemblés (3, 4, 4', 3'), qui sont maintenus les uns aux autres au moyen de barres d'appui (5).

3. Un dispositif d'accrochage pour vélos du type à carrousel selon la revendication 1 ou 2, caractérisé en ce que l'ossature de support présente deux cadres de terminaison (5', 6') et plusieurs cadres intermédiaires (5, 6), des éléments de réception (26) se trouvant sur les cadres (5, 6 ; 5', 6') pour les éléments porteurs supérieurs et inférieurs emboîtables (3, 4 ; 3', 4').

4. Un dispositif d'accrochage pour vélos du type à carrousel selon les revendications 1 à 3, caractérisé en ce que la commande de transport par chaîne (7) est fixée sur des consoles (27) des cadres de terminaison (5', 6').

5. Un dispositif d'accrochage pour vélos du type à carrousel selon les revendications 1 à 4, caractérisé en ce que les cages à bicyclette (8) s'engrènent dans une chaîne de transport (13) de la commande de transport par chaîne (7) au moyen d'entraîneurs (11).

6. Un dispositif d'accrochage pour vélos du type à carrousel selon l'une des revendications 1 à 5, caractérisé en ce que les cages à bicyclette (8) sont reliées en haut et en bas au moyen de barres de liaison (29), les entraîneurs (11) s'engrenant dans une couronne rotative (28) avec des tenons d'entraîneurs (30).

7. Un dispositif d'accrochage pour vélos du type à carrousel selon les revendications 1 à 6, caractérisé en ce qu'un accès verrouillable par une porte (14) est prévu, sur lequel une commande (15) est installée pour diriger le mouvement des cages à bicyclette (8).

8. Un dispositif d'accrochage pour vélos du type à carrousel selon les revendications 1 à 7, caractérisé en ce qu'une potence en forme de parallélogramme à levier (32, 33, 34, 35) pouvant être basculée hors de la cage à bicyclette (8) est prévue, à laquelle un ressort pneumatique (36) applique un bras de levier (32).

9. Un dispositif d'accrochage pour vélos du type à carrousel selon l'une des revendications 1 à 8, caractérisé en ce que la cage à bicyclette (8) présente un cadre (12) en forme de U s'étendant verticalement.
